Europäisches Patentamt

European Patent Office

Office européen des brevets

(19)

(11) **EP 0 769 152 B1**

(12) **FASCICULE DE BREVET EUROPEEN**

(45) Date de publication et mention
de la délivrance du brevet:
**22.07.1998 Bulletin 1998/30**

(21) Numéro de dépôt: **95924392.4**

(22) Date de dépôt: **30.06.1995**

(51) Int Cl.⁶: **G01S 13/60**, G01S 13/34

(86) Numéro de dépôt international:
**PCT/FR95/00879**

(87) Numéro de publication internationale:
**WO 96/01435 (18.01.1996 Gazette 1996/04)**

(54) **PROCEDE ET DISPOSITIF POUR MESURER LA VITESSE D'UN MOBILE**

VERFAHREN UND VORRICHTUNG ZUM GESCHWINDIGKEITSMESSUNG VON FAHRZEUGEN

METHOD AND DEVICE FOR MEASURING THE SPEED OF A MOVING OBJECT

(84) Etats contractants désignés:
**DE ES GB IT**

(30) Priorité: **06.07.1994 FR 9408346**

(43) Date de publication de la demande:
**23.04.1997 Bulletin 1997/17**

(73) Titulaires:
• **Lewiner, Jacques**
  **92210 Saint-Cloud (FR)**
• **Carreel, Eric**
  **F-92190 Meudon (FR)**

(72) Inventeurs:
• **Lewiner, Jacques**
  **92210 Saint-Cloud (FR)**
• **Carreel, Eric**
  **F-92190 Meudon (FR)**

(74) Mandataire: **Burbaud, Eric**
**Cabinet Plasseraud**
**84, rue d'Amsterdam**
**75440 Paris Cédex 09 (FR)**

(56) Documents cités:
**EP-A- 0 534 056**          **FR-A- 2 443 070**

## Description

L'invention est relative aux procédés pour mesurer la vitesse d'un mobile, et aux dispositifs pour mettre en oeuvre ces procédés.

Plus particulièrement, l'invention concerne un procédé pour mesurer la vitesse d'un mobile, notamment un véhicule, en déplacement selon une direction parallèle au sol, cette mesure étant effectuée au moyen d'un radar Doppler présentant un émetteur-récepteur fixé au mobile à une certaine hauteur h au-dessus du sol et prévu pour émettre un faisceau radar vers le sol, selon un axe moyen dirigé vers l'avant ou vers l'arrière par rapport à la direction de déplacement, ce procédé comportant les étapes suivantes :

a) à un premier instant $t_1$, fournir à l'émetteur-récepteur du radar un premier signal électrique de commande sinusoïdal présentant une première fréquence $f_1$, pour faire émettre par l'émetteur-récepteur une première onde radar incidente de même fréquence $f_1$,
b) capter une première onde radar réfléchie, générée par réflexion de la première onde radar incidente sur le sol, et générer à partir de cette première onde radar réfléchie un premier signal électrique capté,
c) multiplier entre eux le premier signal électrique de commande et le premier signal électrique capté, en générant ainsi un premier signal électrique multiplié qui présente une composante de haute fréquence et une composante de basse fréquence,
d) filtrer le premier signal électrique multiplié pour générer un premier signal filtré proportionnel à la composante de basse fréquence du premier signal multiplié,
e) et pendant un premier temps de mesure $\Delta t_1$ à partir du premier instant $t_1$, déterminer un premier spectre en fréquence correspondant au premier signal filtré.

Le document EP-A-0 534 056 décrit un exemple d'un tel procédé.

Ce mode de mesure est plus précis que l'utilisation des traditionnels compte-tours ou capteurs angulaires qui mesurent la vitesse de rotation des roues du véhicule, dans la mesure où les variations de diamètre des roues et les glissements ou patinages des roues sur le sol introduisent des erreurs relativement importantes dans la mesure des vitesses au moyen de compte-tours ou similaires.

En outre, le radar à effet Doppler, qui doit être simplement fixé à la caisse du véhicule, est plus simple à installer qu'un compte-tours, qui implique un mécanisme lié au mouvement des roues.

Dans les procédés connus du genre en question, le spectre en fréquence du signal filtré présente un pic correspondant à une certaine fréquence, et cette fréquence permet de calculer la vitesse du mobile par rapport au sol, en connaissant un angle $\alpha$ formé entre la direction de déplacement du mobile et la direction d'émission et de réception de l'onde radar à partir de l'émetteur-récepteur.

Si l'angle $\alpha$ choisi est de 90°, l'onde émise est bien réfléchie par le sol, même si ce dernier ne présente pas d'irrégularité particulière, mais le déplacement en fréquence dû à l'effet Doppler est nul dans ce cas.

Si par contre l'angle $\alpha$ est faible par rapport à 90°, le déplacement en fréquence dû à l'effet Doppler est grand, à condition de pouvoir recevoir une onde réfléchie par les aspérités du sol qui sont perpendiculaires à l'onde réfléchie.

Le spectre en fréquence du premier signal filtré dépend donc fortement de l'angle $\alpha$.

Pour que cet angle soit bien défini, il est nécessaire que le faisceau radar soit très fin, de sorte que les procédés connus du genre en question fonctionnement mal lorsque le mobile se déplace au-dessus d'un sol relativement lisse, comme l'est par exemple la surface d'une route, notamment par temps de pluie ou de verglas.

En effet, du fait de la finesse du faisceau radar, il existe alors une faible probabilité pour que ce faisceau rencontre un obstacle réfléchissant qui peut renvoyer vers l'émetteur-récepteur une onde réfléchie susceptible de permettre une mesure de la vitesse du mobile.

De plus, pour que le faisceau soit très directif, il est nécessaire d'utiliser une antenne d'émission et de réception directive, et donc de grande dimension latérale par rapport à la longueur d'onde utilisée, ce qui constitue un handicap de coût et de facilité de mise en oeuvre.

En outre, les procédés connus du genre en question génèrent des erreurs de mesure lorsque l'angle $\alpha$ susmentionné varie sans qu'on l'ait voulu, par exemple lorsque le mobile est un véhicule qui est incliné plus ou moins vers l'avant ou vers l'arrière suivant son chargement.

Par ailleurs, le document FR-A-2 443 070 décrit un procédé pour mesurer la vitesse d'un avion par rapport au sol, en émettant vers le sol tour à tour deux ondes radar qui présentent des fréquences variables différentes. Ce procédé, qui n'implique pas de déterminer le spectre en fréquence de la composante basse fréquence du signal multiplié, utilise une méthode itérative qui permet de déterminer deux angles d'incidence particuliers $\alpha1$ et $\alpha2$ qui correspondent respectivement aux valeurs minimales des fréquences de battement correspondant aux deux ondes radar, la fréquence de battement étant la fréquence de la composante basse fréquence du signal multiplié mentionné ci-dessus. Ce procédé n'est donc efficace que pour autant qu'il existe une onde radar réfléchie pour les angles d'incidence $\alpha1$ et $\alpha2$

particuliers ci-dessus : il implique donc les mêmes inconvénients que le procédé susmentionné qui utilisait un faisceau radar fin.

La présente invention a notamment pour but de remédier à ces inconvénients.

A cet effet, selon l'invention, un procédé du genre en question, comportant la détermination d'un spectre en fréquence, est essentiellement caractérisé en ce que le faisceau radar émis est relativement large, en ce que la première fréquence $f_1$ est variable au cours du temps, et en ce qu'il comporte en outre les étapes suivantes :

f) mesurer la hauteur h de l'émetteur-récepteur du radar au-dessus du sol,

g) à un deuxième instant $t_2$ très voisin du premier instant $t_1$, fournir à l'émetteur-récepteur un deuxième signal électrique de commande sinusoïdal présentant une deuxième fréquence $f_2$, pour faire émettre par l'émetteur-récepteur une deuxième onde radar incidente de même fréquence $f_2$,

h) capter une deuxième onde radar réfléchie, générée par réflexion de la deuxième onde radar incidente sur le sol, et générer à partir de cette deuxième onde radar réfléchie un deuxième signal électrique capté,

i) multiplier entre eux le deuxième signal électrique de commande et le deuxième signal électrique capté, en générant ainsi un deuxième signal électrique multiplié qui présente une composante de haute fréquence et une composante de basse fréquence,

j) filtrer le deuxième signal électrique multiplié pour générer un deuxième signal filtré proportionnel à la composante de basse fréquence du deuxième signal multiplié,

k) pendant un deuxième temps de mesure $\Delta t_2$ à partir du deuxième instant de mesure $t_2$, déterminer un deuxième spectre en fréquence correspondant au deuxième signal filtré,

l) repérer sur le premier spectre un premier point singulier, et sur le deuxième spectre un deuxième point singulier, tels que les premier et deuxième spectres présentent au niveau de ces deux points singuliers des formes voisines mais avec un certain décalage en fréquence, ces deux points singuliers étant générés par une réflexion sur un même point du sol,

m) mesurer sur les premier et deuxième spectres des première et deuxième fréquences $F_1$, $F_2$ correspondant respectivement aux premier et deuxième points singuliers,

n) et calculer la vitesse v du mobile par rapport au sol à partir de la hauteur h de l'émetteur-récepteur du radar au-dessus du sol et des première et deuxième fréquences $F_1$, $F_2$ correspondant aux deux points singuliers.

Ainsi, du fait que l'on utilise un faisceau radar large, chaque émission d'une onde radar a de fortes chances de rencontrer un obstacle réfléchissant sur le sol et s'accompagne donc d'une réflexion vers l'émetteur-récepteur du radar, de sorte que l'on dispose toujours d'au moins une partie utilisable sur les premier et deuxième spectres en fréquence pour calculer la vitesse du mobile par effet Doppler.

En outre, on s'affranchit des variations de l'angle $\alpha$, puisque la double mesure Doppler effectuée permet de calculer simultanément l'angle $\alpha$ et la vitesse v : autrement dit, il est possible de calculer une expression de la vitesse v indépendante de l'angle $\alpha$.

Dans des modes de réalisation préférés du procédé selon l'invention, on a recours en outre à l'une et/ou à l'autre des dispositions suivantes :

- les première et deuxième fréquences $f_1$, $f_2$ sont des fonctions linéaires du temps, au moins pendant les premier et deuxième temps de mesure et l'étape n) consiste à résoudre le système suivant de deux équations à deux inconnues $\alpha$ et v :

$$(VII) \qquad F_1 = \left| f'_1 \cdot \frac{2\,h}{c \sin \alpha} - \frac{2\,v \cos \alpha}{c}\, f_1(t_1 + \Delta t_1/2) \right|$$

$$(VIII) \qquad F_2 = \left| f'_2 \cdot \frac{2\,h}{c \sin \alpha} - \frac{2\,v \cos \alpha}{c}\, f_2(t_2 + \Delta t_2/2) \right|$$

où :

. les signes | |, encadrant une expression, désignent la valeur absolue de cette expression, comme dans tout le présent texte,

. c désigne la célérité de l'onde radar dans l'air,

. $\alpha$ désigne un angle entre la direction de déplacement du mobile et une direction s'étendant entre l'émetteur-récepteur et le point du sol ayant généré les premier et deuxièmes points singuliers,

. $f_1(t_1 + \Delta t_1/2)$ désigne une valeur de la première fréquence $f_1$ à un instant $t_1 + \Delta t_1/2$,

. $f'_1$ désigne une valeur d'une dérivée de la première fréquence $f_1$ par rapport au temps, pendant le premier

temps de mesure $\Delta t_1$,

. $f_2(t_2+\Delta t_2/2)$ désigne une valeur de la deuxième fréquence $f_2$ à un instant $t_2+\Delta t_2/2$,

. et $f'_2$ désigne une valeur d'une dérivée de la deuxième fréquence $f_2$ par rapport au temps, pendant le deuxième temps de mesure $\Delta t_2$ ;

- la deuxième fréquence $f_2$ est constante, et la première fréquence $f_1$ présente, à l'instant $t_1+\Delta t_1/2$, une valeur $f_1(t_1+\Delta t_1/2)$ voisine de la deuxième fréquence $f_2$, la vitesse v du mobile par rapport au sol étant calculée par la formule :

$$(XIV) \quad v = \frac{c\ F_2}{2\ f_2\ \sqrt{1 - \left[\dfrac{2\ f'_1\ .\ h}{c\ (F_1 - F_2)}\right]^2}} \quad ;$$

ainsi la vitesse peut être déterminée particulièrement simplement ;

- le faisceau radar comprend une direction d'émission sensiblement perpendiculaire au sol, de sorte que le premier spectre comporte un pic caractéristique $P_1(\pi/2)$ correspondant à cette direction sensiblement perpendiculaire au sol, le procédé comportant une étape consistant à mesurer sur le premier spectre une fréquence $F_1(\pi/2)$ correspondant à ce pic caractéristique, puis une étape consistant à calculer la hauteur h de l'émetteur-récepteur du radar par rapport au sol par la formule :

$$(XV) \quad h = \frac{F_1(\pi/2)\ .\ c}{2\ f'_1} \ ;$$

on évite ainsi d'avoir recours à un capteur supplémentaire pour mesurer la hauteur h ;
- les étapes e) et k) comprennent une étape de numérisation des premier et deuxième signaux filtrés, ce qui permet un mode de détermination du spectre particulièrement simple ;
- les premier et deuxième spectres sont déterminés à partir de la numérisation des premier et deuxième signaux filtrés par transformée de Fourier rapide ;
- les étapes 1 et m sont conduites pour plusieurs paires de premiers et deuxièmes points singuliers de façon à obtenir plusieurs paires de premières et deuxièmes fréquences correspondant respectivement à ces paires de points singuliers sur les premier et deuxième spectres, la vitesse v du mobile étant ensuite calculée en fonction de la hauteur h de l'émetteur-récepteur du radar au-dessus du sol et des différentes paires de premières et deuxièmes fréquences correspondant aux points singuliers ;
- la hauteur h est déterminée en même temps que la vitesse v à partir des différentes paires de premières et deuxièmes fréquences $F_1$, $F_2$ correspondant aux points singuliers ;
- le mobile est un véhicule roulant sur le sol.

L'invention a également pour objet un dispositif pour mettre en oeuvre un procédé tel que défini ci-dessus, ce dispositif comportant :

- un émetteur-récepteur d'onde radar, cet émetteur-récepteur comportant une entrée pour recevoir un signal électrique de commande sinusoïdal présentant une certaine fréquence $f_1$, $f_2$, de façon à générer une onde radar incidente de même fréquence selon un faisceau radar dirigé vers le sol, vers l'avant ou vers l'arrière par rapport à la direction de déplacement, cet émetteur-récepteur comportant en outre une sortie pour générer un signal électrique capté à partir d'une onde radar réfléchie reçue par l'émetteur-récepteur,
- un oscillateur comportant une sortie connectée à l'entrée de l'émetteur-récepteur et prévue pour générer le signal électrique de commande,
- un circuit mélangeur, présentant deux entrées et une sortie, les deux entrées du mélangeur étant connectées respectivement à la sortie de l'émetteur-récepteur et à l'oscillateur, pour recevoir respectivement le signal électrique de commande et le signal électrique capté, le circuit mélangeur générant à sa sortie un signal électrique dit multiplié, correspondant au produit du signal électrique capté et du signal électrique de commande, ce signal multiplié présentant une composante de haute fréquence et une composante de basse fréquence,

-   un filtre passe-bas comportant une entrée et une sortie, l'entrée du filtre passe-bas étant reliée à la sortie du mélangeur pour recevoir le signal multiplié, et le filtre passe-bas étant prévu pour générer à sa sortie un signal filtré représentatif de la composante de basse fréquence du signal multiplié,
-   une unité centrale comportant une première entrée reliée à la sortie du filtre passe-bas pour recevoir le signal filtré, cette unité centrale étant conçue pour déterminer un spectre en fréquence du signal filtré en vue de calculer la vitesse v du mobile à partir du signal filtré,

ce dispositif étant caractérisé en ce que le faisceau de l'onde radar incidente est relativement large, l'oscillateur comportant en outre une entrée de commande prévue pour recevoir une tension de commande, l'oscillateur étant conçu pour que la fréquence du signal électrique de commande soit fonction de la tension de commande, l'entrée de commande de l'oscillateur étant reliée à un générateur de tension lui-même piloté par l'unité centrale, l'unité centrale comportant en outre des moyens pour déterminer une hauteur h de l'émetteur-récepteur par rapport au sol, et l'unité centrale étant conçue pour :

-   faire générer alternativement au générateur de tension une première tension de commande et une deuxième tension de commande, de façon à faire générer alternativement par l'oscillateur des premier et deuxième signaux électriques de commande ayant respectivement des première et deuxième fréquences $f_1$, $f_2$ respectivement proportionnelles aux première et deuxième tensions de commande, au moins la première tension de commande étant variable au cours du temps, de façon qu'au moins la première fréquence $f_1$ soit variable au cours du temps,
-   pendant un premier temps de mesure $\Delta t_1$ à partir d'un premier instant $t_1$, déterminer un premier spectre en fréquence du signal filtré pendant que l'oscillateur génère le premier signal électrique de commande, et pendant un deuxième temps de mesure à partir d'un deuxième instant $t_2$ très voisin du premier instant $t_1$, déterminer un deuxième spectre en fréquence du signal filtré pendant que l'oscillateur génère le deuxième signal électrique de commande,
-   repérer sur le premier spectre un premier point singulier, et sur le deuxième spectre un deuxième point singulier, tels que les premier et deuxième spectres présentent au niveau de ces deux points singuliers des formes voisines mais avec un certain décalage en fréquence, ces deux points singuliers étant générés par une réflexion sur un même point du sol,
-   mesurer sur les premier et deuxième spectres des première et deuxième fréquences $F_1$, $F_2$ correspondant respectivement aux premier et deuxième points singuliers,
-   et calculer la vitesse v du mobile par rapport au sol à partir de la hauteur h de l'émetteur-récepteur du radar au-dessus du sol et des première et deuxième fréquences $F_1$, $F_2$ correspondant aux deux pics.

Dans des modes de réalisation préférés du dispositif de l'invention, on a recours en outre à l'une et/ou à l'autre des dispositions suivantes :

-   les première et deuxième fréquences $f_1$, $f_2$ sont des fonctions linéaires du temps, au moins pendant les premier et deuxième temps de mesure $\Delta t_1$, $\Delta t_2$, et l'unité centrale est conçue pour résoudre le système suivant de deux équations à deux inconnues $\alpha$ et v :

$$(VII) \qquad F_1 = \left| f'_1 \cdot \frac{2\,h}{c\,\sin\alpha} - \frac{2\,v\,\cos\alpha}{c}\,f_1(t_1 + \Delta t_1/2) \right|$$

$$(VIII) \qquad F_2 = \left| f'_2 \cdot \frac{2\,h}{c\,\sin\alpha} - \frac{2\,v\,\cos\alpha}{c}\,f_2(t_2 + \Delta t_2/2) \right|$$

où :

.   c désigne la célérité de l'onde radar dans l'air,
.   $\alpha$ désigne un angle entre la direction de déplacement du mobile et une direction s'étendant entre l'émetteur-récepteur et le point du sol ayant généré les premier et deuxièmes points singuliers,
.   $f_1(t_1 + \Delta t_1/2)$ désigne une valeur de la première fréquence $f_1$ à un premier instant $t_1 + \Delta t_1/2$,
.   $f'_1$ désigne une valeur d'une dérivée de la première fréquence $f_1$ par rapport au temps, pendant le premier temps de mesure $\Delta t_1$,
.   $f_2(t_2 + \Delta t_2/2)$ désigne une valeur de la deuxième fréquence $f_2$ à un instant $t_2 + \Delta t_2/2$,
.   et $f'_2$ désigne une valeur d'une dérivée de la deuxième fréquence $f_2$ par rapport au temps, pendant le deuxième temps de mesure $\Delta t_2$ ;

- l'unité centrale comporte une deuxième entrée reliée à un capteur de hauteur pour recevoir un signal représentatif de la hauteur h de l'émetteur-récepteur par rapport au sol, cette deuxième entrée constituant les moyens susmentionnés de l'unité centrale pour déterminer la hauteur h de l'émetteur-récepteur par rapport au sol ;
- le faisceau de l'onde radar incidente inclut une direction d'émission sensiblement perpendiculaire au sol, de sorte que le premier spectre comporte un pic caractéristique de cette direction sensiblement perpendiculaire au sol, les moyens pour déterminer la hauteur h de l'émetteur-récepteur par rapport au sol comprenant des moyens pour mesurer une fréquence $F_1(\pi/2)$ correspondant à ce pic caractéristique, et des moyens pour calculer cette hauteur h à partir de ladite fréquence $F_1(\pi/2)$ ;
- l'unité de commande est conçue pour numériser le signal filtré qu'elle reçoit à sa première entrée avant de déterminer le spectre en fréquence de ce signal filtré.

D'autres caractéristiques et avantages de l'invention apparaîtront au cours de la description détaillée suivante d'une de ses formes de réalisation, donnée à titre d'exemple non limitatif, en regard des dessins joints.

Sur les dessins :

- la figure 1 est une vue schématique d'ensemble d'un véhicule équipé d'un radar de mesure de la vitesse selon un mode de réalisation de l'invention,
- la figure 2 est un schéma de principe du radar du véhicule de la figure 1,
- la figure 3 est un diagramme montrant un exemple de variation de la fréquence de l'onde émise par le radar de la figure 2, et
- la figure 4 représente deux spectres en fréquence d'un signal en sortie du filtre passe-bas 9 de la figure 2, déterminés à deux instants différents très proches.

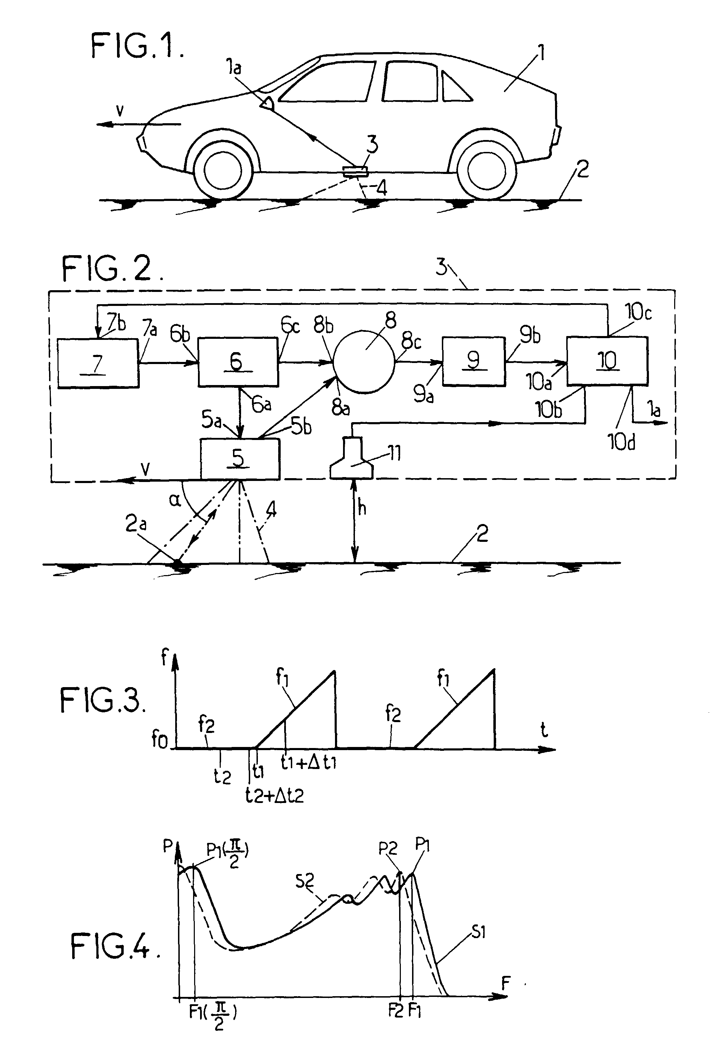

Comme représenté schématiquement sur la figure 1, l,invention a pour but de déterminer la vitesse v d'un mobile 1, notamment d'un véhicule automobile roulant sur un sol 2, cette mesure étant effectuée au moyen d'un radar 3 à effet Doppler qui émet vers le sol et vers l'avant ou vers l'arrière, un faisceau radar 4 incident relativement large, par exemple avec un angle d'ouverture de l'ordre de 45 degrés.

La vitesse mesurée par le radar 3 peut être transmise à un dispositif d'affichage la sur le tableau de bord du véhicule, ou bien à tout autre organe du véhicule, par exemple un système de freinage antiblocage de roues.

Comme représenté schématiquement sur la figure 2, le radar 3 peut comprendre :

- un émetteur-récepteur 5 d'onde radar, cet émetteur-récepteur comportant une entrée 5a pour recevoir un signal électrique de commande sinusoïdal, de façon à générer une onde radar incidente de même fréquence que ce signal, selon le faisceau radar 4 incident, cet émetteur-récepteur comportant en outre une sortie 5b pour générer un signal électrique capté à la réception d'une onde radar réfléchie par le sol 2 à partir de l'onde incidente,
- un oscillateur 6 contrôlé en tension, qui comporte une sortie 6a connectée à l'entrée 5a de l'émetteur-récepteur et une entrée 6b prévue pour recevoir une tension de commande, la sortie 6a étant prévue pour générer ledit signal électrique de commande avec une fréquence $f_1$, $f_2$ dépendant de la tension de commande,
- un générateur de tension 7, présentant une sortie 7a pour générer ladite tension de commande, et une entrée logique 7b pour piloter la tension de commande,
- un circuit mélangeur 8, présentant deux entrées 8a 8b et une sortie 8c, l'entrée 8a du mélangeur étant connectée à la sortie 5b de l'émetteur-récepteur et l'entrée 8b du mélangeur étant connectée à la sortie 6a de l'oscillateur ou éventuellement à une sortie supplémentaire 6c de cet oscillateur à laquelle est généré un signal électrique proportionnel au signal électrique de commande, mais de puissance moindre, le circuit mélangeur 8 étant conçu pour générer à sa sortie 8c un signal électrique dit multiplié, qui correspond au produit du signal électrique capté et du signal électrique de commande, ce signal multiplié présentant une composante de haute fréquence et une composante de basse fréquence,
- un filtre passe-bas 9 présentant une entrée 9a qui est connectée à la sortie 8c du mélangeur et une sortie 9b à laquelle est généré un signal filtré représentatif de la composante de basse fréquence du signal multiplié,
- une unité centrale 10 comportant une première entrée 10a reliée à la sortie 9b du filtre passe-bas pour recevoir le signal filtré, une deuxième entrée 10b reliée à un capteur de hauteur 11, par exemple un capteur à ultrasons ou autre, pour recevoir un signal représentatif de la hauteur h de l'émetteur-récepteur 5 par rapport au sol 2, cette hauteur h étant mesurée perpendiculairement au sol, et l'unité centrale comportant en outre une première sortie 10c reliée à l'entrée logique 7b du générateur de tension 7, pour piloter ce générateur de tension, et une deuxième sortie 10d reliée à l'affichage la ou autre.

L'unité centrale 10 est programmée pour :

- faire générer alternativement au générateur de tension 7 une première tension de commande variable au cours du temps et une deuxième tension de commande fixe ou variable, de façon à faire générer alternativement par l'oscillateur des premier et deuxième signaux électriques de commande $Ec_1$ et $Ec_2$ ayant respectivement les première et deuxième fréquences $f_1$, $f_2$ qui sont proportionnelles respectivement aux première et deuxième tensions de commande (par exemple, $f_1$ peut consister en une portion de rampe, croissant linéairement à partir d'une fréquence fixe $f_o$ puis retombant à $f_o$, et $f_2$ peut consister en une fréquence fixe $f_o$, comme représenté sur la figure 3),
- déterminer un premier spectre en fréquences $S_1$ du signal filtré, pendant un premier temps de mesure $\Delta t_1$ à partir d'un premier instant $t_1$ pendant que l'oscillateur génère le premier signal électrique de commande $Ec_1$, et déterminer un deuxième spectre en fréquences $S_2$ du signal filtré pendant un deuxième temps de mesure $\Delta t_2$ à partir d'un deuxième instant $t_2$ très voisin du premier instant $t_1$ (antérieur ou postérieur au premier instant $t_1$), pendant que l'oscillateur génère le deuxième signal électrique de commande $Ec_2$ (voir figure 4),
- repérer sur le premier spectre $S_1$ un premier pic $P_1$, et sur le deuxième spectre $S_2$ un deuxième pic $P_2$, tels que les premier et deuxième spectres présentent au niveau de ces deux pics des formes voisines mais avec un certain décalage en fréquence, ces deux pics étant alors générés par une réflexion sur le même point réfléchissant 2a du sol, ce point correspondant en général à une irrégularité du sol,
- mesurer des première et deuxième fréquences $F_1$, $F_2$ correspondant respectivement aux premier et deuxième pics $P_1$, $P_2$ sur les premièr et deuxième spectres $S_1$, $S_2$,
- et calculer la vitesse v du mobile par rapport au sol à partir de la hauteur h de l'émetteur-récepteur du radar au-dessus du sol, et des première et deuxième fréquences $F_1$, $F_2$ mesurées, ce calcul s'effectuant comme expliqué ci-après.

Au voisinage du premier instant $t_1$, le premier signal électrique de commande $Ec_1$ peut s'exprimer sous la forme :

$$(I) \qquad Ec_1 = A_1 \sin (2\,\pi\,f_1(t_1).\,t\,),$$

où :

- t représente le temps,
- $A_1$ est une constante,
- et $f_1(t_1)$ représente la valeur de la première fréquence $f_1$ au premier instant $t_1$.

Dans ces conditions, le premier signal électrique capté $Er_1$ correspondant au premier pic $P_1$ s'exprime comme suit, suivant la formule bien connue du décalage Doppler :

$$(II) \qquad Er_1 = A_2 \sin \left[ 2\,\pi\,f_1(t_1).\left[ 1 + \frac{2\ v\cos\ \alpha}{c} \right].t \right]$$

où :

- $A_2$ est une constante,
- $\alpha$ représente l'angle entre la direction de déplacement du mobile et la direction du point 2a du sol vu depuis l'émetteur-récepteur 5 ($\alpha$ est compris entre 0 et $\pi/2$ radians si le faisceau radar est dirigé vers l'avant, entre $\pi/2$ et $\pi$ si le faisceau est dirigé vers l'arrière),
- et c représente la célérité de l'onde radar dans l'air.

Le premier signal électrique capté $Er_1$ est généré à la sortie 5b de l'émetteur-récepteur 5 à un instant t1 + dt, où dt correspond au temps d'aller-retour de l'onde électromagnétique entre l'émetteur-récepteur et le point 2a du sol.

Par conséquent, le circuit mélangeur 8 génère un signal dit multiplié qui est le produit du premier signal électrique capté, correspondant à la formule (II) ci-dessus, et du premier signal électrique de commande, mais ce premier signal électrique de commande ayant alors une fréquence $f_1$ (t1 + dt), puisque cette multiplication s'effectue à l'instant t1 + dt.

Le signal dit multiplié généré en sortie du mélangeur correspond à la somme des deux termes $C_1$ et $D_1$ ci-dessous, conformément aux formules trigonométriques classiques :

(III)

$$C_1 = -\frac{A_1\ A_2}{2} \cos\left\{2\ \pi\left[f_1(t_1+dt) + f_1(t_1)\ [1 + \frac{2\ v\ \cos\ \alpha}{c}]\right].t\right\}$$

$$D_1 = \frac{A_1\ A_2}{2} \cos\left\{2\ \pi\left[f_1(t_1+dt) - f_1(t_1)\ [1 + \frac{2\ v\ \cos\ \alpha}{c}]\right].t\right\}$$

Le terme $C_1$ est un signal de haute fréquence, tandis que le terme $D_1$ est un signal de basse fréquence.

Seul le signal $D_1$ de basse fréquence est transmis par le filtre passe-bas 9 à la première entrée 10a de l'unité centrale 10. Ce signal de basse fréquence présente une fréquence $F_1$ qui correspond à un pic $P_1$ sur le premier spectre $S_1$, c'est-à-dire à la réflexion de l'onde radar sur le point réfléchissant 2a.

Si le premier temps de mesure $\Delta t_1$ était nul, cette fréquence s'exprimerait sous la forme :

$$(IV) \qquad F_1 = \left| f_1(t_1+dt) - f_1(t_1)\ [1 + \frac{2\ v\ \cos\ \alpha}{c}] \right|$$

$$= \left| f_1(t_1+dt) - f_1(t_1) - \frac{2\ v\ \cos\ \alpha}{c} f_1(t_1) \right|,$$

où : | | désigne la fonction valeur absolue.

De préférence, $f_1$ est une fonction linéaire du temps au moins pendant le premier temps de mesure $\Delta t_1$, de sorte que $f_1(t_1+dt)-f_1(t_1)=f'_1.dt$, où $f'_1$ est la valeur de la dérivée de la première fréquence $f_1$ par rapport au temps, pendant le premier temps de mesure $\Delta t_1$.

D'autre part, il faut tenir compte du fait que le premier temps de mesure $\Delta t_1$ n'est pas nul, de sorte que l'expression (IV) peut s'écrire, en première approximation :

$$(V) \qquad F_1 = \left| f'_1 . dt - \frac{2\ v\ \cos\ \alpha}{c} f_1(t_1 + \Delta t_1/2) \right|.$$

D'autre part, l'intervalle de temps dt peut s'exprimer sous la forme :

$$(VI) \qquad dt = \frac{2\ h}{c\ \sin\ \alpha}$$

d'où :

$$(VII) \qquad F_1 = \left| f'_1 \cdot \frac{2\ h}{c\ \sin\ \alpha} - \frac{2\ v\ \cos\ \alpha}{c} f_1(t_1+\Delta t_1/2) \right|.$$

D'autre part, l'onde radar incidente correspondant au deuxième signal électrique de commande $Ec_2$ génère également une réflexion importante sur le point 2a du sol, et, du fait que le deuxième instant $t_2$ est très proche du premier instant $t_1$, l'angle $\alpha$ entre la direction de déplacement du véhicule et la direction sous laquelle est vu le point 2a depuis l'émetteur-récepteur 5 est sensiblement le même aux instants $t_1$ et $t_2$.

Dans ces conditions, de la même façon qu'expliqué ci-dessus, le deuxième spectre $S_2$ comporte un pic $P_2$ qui correspond à la réflexion de l'onde radar sur le point 2a, ce pic $P_2$ correspondant à une fréquence $F_2$ qui s'exprime comme suit :

$$(VIII) \qquad F_2 = \left| f'_2 \cdot \frac{2\ h}{c\ \sin\ \alpha} - \frac{2\ v\ \cos\ \alpha}{c} f_2(t_2+\Delta t_2/2) \right|$$

où :

- $f_2(t_2+\Delta t_2/2)$ est la valeur de la deuxième fréquence $f_2$ à l'instant $t_2+\Delta t_2/2$,
- $f'_2$ est la valeur de la dérivée de la deuxième fréquence $f_2$ par rapport au temps, pendant le deuxième temps de mesure $\Delta t_2$.

Ainsi, l'unité centrale 10 peut déterminer la vitesse v du véhicule, en résolvant le système des deux équations (VII) et (VIII) à deux inconnues $\alpha$ et v, les autres paramètres de ces deux équations étant tous connus de l'unité centrale 10.

Le système des équations (VII) et (VIII) peut donc s'écrire :

$$(IX) \qquad F_1 = \frac{a_1}{\sin \alpha} + b_1 \, v.\cos \alpha$$

$$F_2 = \frac{a_2}{\sin \alpha} + b_2 \, v.\cos \alpha$$

où :

- $a_1$, $b_1$, $a_2$, $b_2$ sont des paramètres connus, ce système d'équations se résolvant en :

$$(X) \qquad \sin \alpha = \frac{a_1 \, b_2 - a_2 \, b_1}{b_2 \, F_1 - b_1 \, F_2}$$

$$v = \frac{F_2 - a_2 / \sin \alpha}{b_2 \, \sqrt{1 - \sin^2 \alpha}} \qquad \text{(en valeur absolue)}$$

compte-tenu du fait que $\cos^2 \alpha + \sin^2 \alpha = 1$.

Eventuellement, la deuxième fréquence $f_2$ peut être constante, comme représenté sur la figure 3, auquel cas la fréquence $F_2$ du deuxième pic $P_2$ correspond à l'expression :

$$(XI) \qquad F_2 = \left| - \frac{2 \, v \cos \alpha}{c} \, f_2 \right|.$$

Si les valeurs $f_1(t_1 + \Delta t_1 / 2)$ et $f_2$ sont très voisines, comme représenté sur la figure 3, on peut alors écrire, compte-tenu des formules (XI) et (VII) et compte tenu également du fait que l'expression dont $F_1$ est la valeur absolue est de même signe que son terme en 2 vcos $\alpha$/c pour les valeurs habituelles de h, v et $\alpha$ :

$$(XII) \qquad |F_1 - F_2| = \left| f'_1 \cdot \frac{2 \, h}{c. \, \sin \alpha} \right|,$$

d'où il résulte que :

$$(XIII) \qquad \sin \alpha = \left| \frac{2 \, f'_1 \cdot h}{c \, (F_1 - F_2)} \right|$$

$$v = \frac{c \, F_2}{2 \, f_2 \, \sqrt{1 - \sin^2 \alpha}}$$

La valeur de la vitesse v correspond donc à l'expression suivante :

$$(XIV) \quad v = \frac{c\ F_2}{2\ f_2\ \sqrt{1 - \left[\dfrac{2\ f'_1\ .\ h}{c\ (F_1 - F_2)}\right]^2}}$$

Dans un cas particulier où $f_1$ et $f_2$ sont tels que représentés sur la figure 3, où $f_1$ est une fonction linéaire du temps, de pente 1 GHz/s, où $f_2$ présente une valeur constante $f_0$ valant par exemple 24 GHz, où $f_2(t_2) = f_1(t_1)$, la deuxième fréquence $F_2$ du deuxième pic $P_2$ vaudrait 2376 Hz pour un angle $\alpha$ de 30°, et la différence entre les fréquences F1 et F2 vaudrait 46 Hz pour une hauteur h de 0,5 m.

Du fait de la faible valeur des fréquences $F_1$ et $F_2$, les premier et deuxième spectres $S_1$ et $S_2$ peuvent être obtenus très facilement, par exemple par transformée de Fourier rapide, à partir d'une numérisation du signal filtré arrivant à la première entrée 10a de l'unité centrale 10.

Eventuellement, on peut éviter l'emploi d'un capteur de hauteur 11, en prévoyant que le faisceau 4 de l'onde radar incidente, ou qu'une partie de ce faisceau, englobe une direction 4a perpendiculaire au sol 2, de façon que le premier spectre en fréquence $S_1$ présente un pic caractéristique relativement important $P_1(\pi/2)$ correspondant à une fréquence $F_1(\pi/2)$ très basse.

En effet, ce pic correspond à une valeur de l'angle $\alpha$ égale à $\pi/2$, de sorte qu'à partir de l'équation (VII) ci-dessus, il est possible de calculer la hauteur h de l'émetteur-récepteur 5 par rapport au sol 2 par la formule :

$$(XV) \quad h = \frac{F_1(\pi/2)\ .\ c}{2\ f'_1}\ .$$

L'invention n'est pas limitée à la forme de réalisation particulière qui vient d'être décrite ; elle en embrasse au contraire toutes les variantes, et notamment :

- celles dans lesquelles les deux spectres $S_1$ et $S_2$ sont déterminés simultanément, le radar émettant et recevant simultanément dans deux fréquences $f_1$ et $f_2$ différentes et comportant des filtres permettant de séparer les signaux respectifs relatifs à chacune des deux fréquences $f_1$ et $f_2$ ;
- celles dans lesquelles on détermine la vitesse v non pas uniquement à partir d'une paire de fréquences $F_1$, $F_2$ correspondant à une paire de pics $P_1$, $P_2$ sur les premier et deuxième spectres, mais à partir de plusieurs paires de fréquences $F_1$, $F_2$ correspondant à plusieurs paires de pics sur les deux spectres, la valeur calculée pour la vitesse v pouvant être alors par exemple la moyenne des différentes valeurs de la vitesse v calculées à partir de chaque paire de fréquences $F_1$, $F_2$ ; dans ce cas, il est également possible de déterminer la hauteur h en même temps que la vitesse v à partir des différentes paires de fréquences $F_1$, $F_2$, en résolvant le système d'équations correspondant aux différentes équations (VII) et (VIII) relatives aux différentes fréquences $F_1$, $F_2$ : autrement dit, on peut calculer une expression de la vitesse v indépendante de la hauteur h ;
- et celles dans lesquelles les fréquences $F_1$, $F_2$ qui servent à calculer la vitesse v correspondent de façon générale à des points singuliers sur les spectres $S_1$, $S_2$, c'est-à-dire non seulement des pics, mais également éventuellement des minima ou tout autre point caractéristique.

Pour limiter l'encombrement spectral, la modulation de fréquence en dent de scie représentée sur la figure 3 pourrait avantageusement comporter des dents de scie sensiblement symétriques, c'est-à-dire avec une pente montante et une pente descendante non verticales.

Pour faciliter la modulation de la fréquence radar, cette modulation pourrait être sinusoïdale, les mesures des spectres étant effectuées dans les parties sensiblement linéaires des courbes sinusoïdales de variation de fréquence (c'est-à-dire au voisinage des points d'inflexion de ces courbes sinusoïdales).

## Revendications

1. Procédé pour mesurer la vitesse v d'un mobile (1) en déplacement selon une direction parallèle au sol (2), cette mesure étant effectuée au moyen d'un radar Doppler (3) présentant un émetteur-récepteur (5) fixé au mobile (1) à une certaine hauteur h au-dessus du sol et prévu pour émettre un faisceau radar (4) vers le sol selon un axe moyen dirigé vers l'avant ou vers l'arrière par rapport à la direction de déplacement, ce procédé comportant les étapes suivantes :

a) à un premier instant $t_1$, fournir à l'émetteur-récepteur (5) du radar un premier signal électrique de commande ($Ec_1$) sinusoïdal présentant une première fréquence $f_1$, pour faire émettre par l'émetteur-récepteur (5) une première onde radar incidente de même fréquence $f_1$,

b) capter une première onde radar réfléchie, générée par réflexion de la première onde radar incidente sur le sol, et générer à partir de cette première onde radar réfléchie un premier signal électrique capté ($Er_1$),

c) multiplier entre eux le premier signal électrique de commande ($Ec_1$) et le premier signal électrique capté ($Er_1$), en générant ainsi un premier signal électrique multiplié ($Ec_1.Er_1$) qui présente une composante de haute fréquence ($C_1$) et une composante de basse fréquence ($D_1$),

d) filtrer le premier signal électrique multiplié ($Ec_1.Er_1$) pour générer un premier signal filtré proportionnel à la composante de basse fréquence ($D_1$) du premier signal multiplié,

e) et pendant un premier temps de mesure $\Delta t_1$ à partir du premier instant $t_1$, déterminer un premier spectre en fréquence ($S_1$) correspondant au premier signal filtré, **ce procédé étant caractérisé en ce que** le faisceau radar (4) émis est relativement large, en ce que la première fréquence $f_1$ est variable au cours du temps, et en ce que ledit procédé comporte en outre les étapes suivantes :

f) mesurer la hauteur h de l'émetteur-récepteur (5) du radar au-dessus du sol,

g) à un deuxième instant $t_2$ très voisin du premier instant $t_1$, fournir à l'émetteur-récepteur (5) un deuxième signal électrique de commande ($Ec_2$) sinusoïdal présentant une deuxième fréquence $f_2$, pour faire émettre par l'émetteur-récepteur (5) une deuxième onde radar incidente de même fréquence $f_2$,

h) capter une deuxième onde radar réfléchie, générée par réflexion de la deuxième onde radar incidente sur le sol, et générer à partir de cette deuxième onde radar réfléchie un deuxième signal électrique capté ($Er_2$),

i) multiplier entre eux le deuxième signal électrique de commande ($Ec_2$) et le deuxième signal électrique capté ($Er_2$), en générant ainsi un deuxième signal électrique multiplié ($Ec_2.Er_2$) qui présente une composante de haute fréquence ($C_2$) et une composante de basse fréquence ($D_2$),

j) filtrer le deuxième signal électrique multiplié ($Ec_2.Er_2$) pour générer un deuxième signal filtré proportionnel à la composante de basse fréquence ($D_2$) du deuxième signal multiplié,

k) pendant un deuxième temps de mesure $\Delta t_2$ à partir du deuxième instant $t_2$, déterminer un deuxième spectre en fréquence ($S_2$) correspondant au deuxième signal filtré,

l) repérer sur le premier spectre ($S_1$) un premier point singulier ($P_1$), et sur le deuxième spectre ($S_2$) un deuxième point singulier ($P_2$), tels que les premier et deuxième spectres présentent au niveau de ces deux points singuliers des formes voisines mais avec un certain décalage en fréquence, ces deux points singuliers étant générés par une réflexion sur un même point (2a) du sol,

m) mesurer sur les premier et deuxième spectres ($S_1$, $S_2$) des première et deuxième fréquences $F_1$, $F_2$ correspondant respectivement aux premier et deuxième points singuliers ($P_1$, $P_2$),

n) et calculer la vitesse v du mobile par rapport au sol à partir de la hauteur h de l'émetteur-récepteur du radar au-dessus du sol et des première et deuxième fréquences $F_1$, $F_2$ correspondant aux deux points singuliers ($P_1$, $P_2$).

2. Procédé selon la revendication 1, dans lequel :

- les première et deuxième fréquences $f_1$, $f_2$ sont des fonctions linéaires du temps, au moins pendant les premier et deuxième temps de mesure $\Delta t_1$, $\Delta t_2$,

- et l'étape n) consiste à résoudre le système suivant de deux équations à deux inconnues $\alpha$ et v :

$$(VII) \qquad F_1 = \left| f'_1 \cdot \frac{2\,h}{c\,\sin\alpha} - \frac{2\,v\,\cos\alpha}{c}\,f_1(t_1 + \Delta t_1/2) \right|$$

$$(VIII) \qquad F_2 = \left| f'_2 \cdot \frac{2\,h}{c\,\sin\alpha} - \frac{2\,v\,\cos\alpha}{c}\,f_2(t_2 + \Delta t_2/2) \right|$$

où :

- c désigne la célérité de l'onde radar dans l'air,

- $\alpha$ désigne un angle entre la direction de déplacement du mobile et une direction s'étendant entre l'émetteur-récepteur (5) et le point (2a) du sol ayant généré les premier et deuxièmes points singuliers ($P_1$, $P_2$),

- $f_1(t_1 + \Delta t_1/2)$ désigne une valeur de la première fréquence $f_1$ à un instant $t_1 + \Delta t_1/2$,

- $f'_1$ désigne une valeur d'une dérivée de la première fréquence $f_1$ par rapport au temps, pendant le premier

temps de mesure $\Delta t_1$,

- $f_2(t_2+\Delta t_2/2)$ désigne une valeur de la deuxième fréquence $f_2$ à un instant $t_2+\Delta t_2/2$,
- et $f'_2$ désigne une valeur d'une dérivée de la deuxième fréquence $f_2$ par rapport au temps, pendant le deuxième temps de mesure $\Delta t_2$.

3. Procédé selon la revendication 2, dans lequel la deuxième fréquence $f_2$ est constante, et la première fréquence $f_1$ présente, à l'instant $t_1+\Delta t_1/2$, une valeur $f_1(t_1+\Delta t_1/2)$ voisine de la deuxième fréquence $f_2$, la vitesse v du mobile par rapport au sol étant calculée par la formule :

$$(XIV) \quad v = \frac{c\ F_2}{2\ f_2\ \sqrt{1 - \left[\dfrac{2\ f'_1\ .\ h}{c\ (F_1 - F_2)}\right]^2}}$$

4. Procédé selon l'une quelconque des revendications 2 et 3, dans lequel le faisceau radar (4) comprend une direction d'émission (4a) sensiblement perpendiculaire au sol (2), de sorte que le premier spectre ($S_1$) comporte un pic caractéristique $P_1(\pi/2)$ correspondant à cette direction sensiblement perpendiculaire au sol (2), l'étape f) du procédé comportant une étape consistant à mesurer sur le premier spectre ($S_1$) une fréquence $F_1(\pi/2)$ correspondant à ce pic caractéristique, puis une étape consistant à calculer la hauteur h de l'émetteur-récepteur (5) du radar par rapport au sol par la formule :

$$(XV) \quad h = \frac{F_1(\pi/2)\ .\ c}{2\ f'_1}\ .$$

5. Procédé selon l'une quelconque des revendications précédentes, dans lequel les étapes e) et k) comprennent une étape de numérisation des premier et deuxième signaux filtrés.

6. Procédé selon la revendication 5, dans lequel les premier et deuxième spectres ($S_1$, $S_2$) sont déterminés à partir de la numérisation des premier et deuxième signaux filtrés par transformée de Fourier rapide.

7. Procédé selon l'une quelconque des revendications précédentes, dans lequel les étapes l) et m) sont conduites pour plusieurs paires de premiers et deuxièmes points singuliers ($P_1$, $P_2$), de façon à obtenir plusieurs paires de premieres et deuxièmes fréquences $F_1$, $F_2$ correspondant respectivement à ces paires de points singuliers sur les premier et deuxième spectres ($S_1$, $S_2$), la vitesse v du mobile étant ensuite calculée en fonction de la hauteur h de l'émetteur-récepteur du radar au-dessus du sol et des différentes paires de premières et deuxièmes fréquences $F_1$, $F_2$ correspondant aux points singuliers.

8. Procédé selon la revendication 7, dans lequel l'étape f) consiste à calculer la hauteur h en même temps que la vitesse v à partir des différentes paires de premières et deuxièmes fréquences $F_1$, $F_2$ correspondant aux points singuliers.

9. Procédé selon l'une quelconque des revendications précédentes, dans lequel, le mobile (1) est un véhicule roulant sur le sol (2).

10. Dispositif pour mettre en oeuvre un procédé selon l'une quelconque des revendications précédentes en vue de mesurer la vitesse v d'un mobile (1) en déplacement selon une direction parallèle au sol (2) ce dispositif comportant :

- un émetteur-récepteur (5) d'onde radar, cet émetteur-récepteur comportant une entrée (5a) pour recevoir un signal électrique de commande ($Ec_1$, $Ec_2$) sinusoïdal présentant une certaine fréquence $f_1$, $f_2$, de façon à générer une onde radar incidente de même fréquence en formant un faisceau radar (4) dirigé vers le sol, vers l'avant ou vers l'arrière par rapport à la direction de déplacement, cet émetteur-récepteur (5) comportant en outre une sortie (5b) pour générer un signal électrique capté ($Er_1$, $Er_2$), à partir d'une onde radar réfléchie reçue par l'émetteur-récepteur,

- un oscillateur (6) comportant une sortie (6a) connectée à l'entrée (5a) de l'émetteur-récepteur et prévue pour générer le signal électrique de commande ($Ec_1$, $Ec_2$),

- un circuit mélangeur (8), présentant deux entrées (8a, 8b) et une sortie (8c), les deux entrées (8a, 8b) du mélangeur étant connectées respectivement à la sortie (5b) de l'émetteur-récepteur et à l'oscillateur, pour recevoir respectivement le signal électrique de commande ($Ec_1$, $Ec_2$) et le signal électrique capté ($Er_1$, $Er_2$), le circuit mélangeur générant à sa sortie (8c) un signal électrique dit multiplié, correspondant au produit du signal électrique capté ($Er_1$, $Er_2$) et du signal électrique de commande ($Ec_1$, $Ec_2$), ce signal multiplié présentant une composante de haute fréquence ($C_1$, $C_2$) et une composante de basse fréquence ($D_1$, $D_2$),

- un filtre passe-bas (9) comportant une entrée (9a) et une sortie (9b), l'entrée (9a) du filtre passe-bas étant reliée à la sortie (8c) du mélangeur pour recevoir le signal multiplié, et le filtre passe-bas étant prévu pour générer à sa sortie (9b) un signal filtré représentatif de la composante de basse fréquence ($D_1$, $D_2$) du signal multiplié,

- une unité centrale (10) comportant une première entrée (10a) reliée à la sortie (9b) du filtre passe-bas pour recevoir le signal filtré, cette unité centrale (10) étant conçue pour déterminer un spectre en fréquence du signal filtré en vue de calculer la vitesse v du mobile à partir du signal filtré,

**ce dispositif étant caractérisé en ce que** le faisceau (4) de l'onde radar incidente est relativement large, l'oscillateur (6) comportant en outre une entrée de commande (6b) prévue pour recevoir une tension de commande, l'oscillateur (6) étant conçu pour que la fréquence du signal électrique de commande ($Ec_1$, $Ec_2$) soit fonction de la tension de commande, l'entrée de commande (6b) de l'oscillateur étant reliée à un générateur de tension (7) lui-même piloté par l'unité centrale, l'unité centrale (10) comportant en outre des moyens pour déterminer une hauteur h de l'émetteur-récepteur (5) par rapport au sol, et l'unité centrale (10) étant conçue pour :

- faire générer alternativement au générateur de tension (7) une première tension de commande et une deuxième tension de commande, de façon à faire générer alternativement par l'oscillateur des premier et deuxième signaux électriques de commande ($Ec_1$, $Ec_2$) ayant respectivement des première et deuxième fréquences $f_1$, $f_2$ respectivement proportionnelles aux première et deuxième tensions de commande, au moins la première tension de commande étant variable au cours du temps, de façon qu'au moins la première fréquence $f_1$ soit variable au cours du temps,

- pendant un premier temps de mesure $\Delta t_1$ à partir d'un premier instant $t_1$, déterminer un premier spectre en fréquence ($S_1$) du signal filtré pendant que l'oscillateur génère le premier signal électrique de commande ($Ec_1$), et pendant un deuxième temps de mesure $\Delta t_2$ à partir d'un deuxième instant $t_2$ très proche du premier instant $t_1$ déterminer un deuxième spectre en fréquence ($S_2$) du signal filtré à un deuxième instant $t_2$ très voisin du premier instant $t_1$, pendant que l'oscillateur génère le deuxième signal électrique de commande ($Ec_2$),

- repérer sur le premier spectre ($S_1$) un premier point singulier ($P_1$), et sur le deuxième spectre ($S_2$) un deuxième point singulier ($P_2$), tels que les premier et deuxième spectres présentent au niveau de ces deux points singuliers des formes voisines mais avec un certain décalage en fréquence, ces deux points singuliers étant générés par une réflexion sur un même point (2a) du sol,

- mesurer sur les premier et deuxième spectres ($S_1$, $S_2$) des première et deuxième fréquences $F_1$, $F_2$ correspondant respectivement aux premier et deuxième points singuliers ($P_1$, $P_2$),

- et calculer la vitesse v du mobile par rapport au sol à partir de la hauteur h de l'émetteur-récepteur du radar au-dessus du sol et des première et deuxième fréquences $F_1$, $F_2$ correspondant aux deux points singuliers ($P_1$, $P_2$).

**11.** Dispositif selon la revendication 10, dans lequel :

- les première et deuxième fréquences $f_1$, $f_2$ sont des fonctions linéaires du temps, au moins pendant les premier et deuxième temps de mesure $\Delta t_1$, $\Delta t_2$,

- et l'unité centrale est conçue pour résoudre le système suivant de deux équations à deux inconnues $\alpha$ et v :

$$(\text{VII}) \qquad F_1 = \left| f'_1 \cdot \frac{2\,h}{c \sin \alpha} - \frac{2\,v \cos \alpha}{c}\, f_1(t_1 + \Delta t_1/2) \right|$$

$$(\text{VIII}) \qquad F_2 = \left| f'_2 \cdot \frac{2\,h}{c \sin \alpha} - \frac{2\,v \cos \alpha}{c}\, f_2(t_2 + \Delta t_2/2) \right|$$

où :

EP 0 769 152 B1

- c désigne la célérité de l'onde radar dans l'air,
- $\alpha$ désigne un angle entre la direction de déplacement du mobile et une direction s'étendant entre l'émetteur-récepteur (5) et le point (2a) du sol ayant généré les premier et deuxièmes points singuliers ($P_1$, $P_2$),
- $f_1(t_1+\Delta t_1/2)$ désigne une valeur de la première fréquence $f_1$ à un premier instant $t_1+\Delta t_1/2$,
- $f'_1$ désigne une valeur d'une dérivée de la première fréquence $f_1$ par rapport au temps, pendant le premier temps de mesure $\Delta t_1$,
- $f_2(t_2+\Delta t_2/2)$ désigne une valeur de la deuxième fréquence $f_2$ à un instant $t_2+\Delta t_2/2$,
- et $f'_2$ désigne une valeur d'une dérivée de la deuxième fréquence $f_2$ par rapport au temps, pendant le deuxième temps de mesure $\Delta t_2$.

12. Dispositif selon l'une quelconque des revendications 10 et 11, dans lequel l'unité centrale (10) comporte une deuxième entrée (10b) reliée à un capteur de hauteur (11) pour recevoir un signal représentatif de la hauteur h de l'émetteur-récepteur (5) par rapport au sol (2), cette deuxième entrée (10b) constituant les moyens susmentionnés de l'unité centrale pour déterminer la hauteur h de l'émetteur-récepteur par rapport au sol.

13. Dispositif selon l'une quelconque des revendications 10 et 11, dans lequel le faisceau (4) de l'onde radar incidente inclut une direction d'émission (4a) sensiblement perpendiculaire au sol (2), de sorte que le premier spectre ($S_1$) comporte un pic ($P_1(\pi/2)$) caractéristique de cette direction sensiblement perpendiculaire au sol, les moyens pour déterminer la hauteur h de l'émetteur-récepteur par rapport au sol comprenant des moyens pour mesurer une fréquence $F_1(\pi/2)$ correspondant à ce pic caractéristique, et des moyens pour calculer cette hauteur h à partir de ladite fréquence $F_1(\pi/2)$.

14. Dispositif selon l'une quelconque des revendications 10 à 13, dans lequel l'unité de commande (10) est conçue pour numériser le signal filtré qu'elle reçoit à sa première entrée (10a) avant de déterminer le spectre en fréquence ($S_1$, $S_2$) de ce signal filtré.


**Patentansprüche**

1. Verfahren zur Messung der Geschwindigkeit v eines sich in einer parallel zum Boden (2) verlaufenden Richtung bewegenden Fahrzeugs (1), wobei diese Messung mit Hilfe einer Doppler-Radarvorrichtung (3) durchgeführt wird, welche eine Sende/Empfangseinheit (5) umfaßt, die am Fahrzeug (1) in einer bestimmten Höhe h über dem Boden angebracht ist und dazu dient, einen Radarstrahl (4) entlang einer sich zur Bewegungsrichtung nach vorne oder nach hinten erstrekkenden mittleren Achse zum Boden zu senden, wobei das Verfahren die folgenden Verfahrensschritte umfaßt:

   a) Senden eines ersten elektrischen Sinus-Steuersignals ($Ec_1$) mit einer ersten Frequenz $f_1$ an die Radar-Sende/ Empfangseinheit (5) zu einem ersten Zeitpunkt $t_1$, wodurch die Sende/Empfangseinheit (5) eine erste Auftreff-Radarwelle mit derselben Frequenz $f_1$ aussendet;

   b) Auffangen einer ersten reflektierten Radarwelle, welche durch die Reflektion der ersten, auf dem Boden auftreffenden Radarwelle entsteht, und Erzeugung eines ersten elektrischen Auffangsignals ($Er_1$) aus dieser ersten reflektierten Radarwelle,

   c) Multiplizieren des ersten elektrischen Steuersignals ($Ec_1$) mit dem ersten elektrischen Auffangsignal ($Er_1$) zur Erzeugung eines ersten elektrischen Multiplikationssignals ($Ec_1 . Er_1$), welches eine Hochfrequenzkomponente ($C_1$) und eine Niedrigfrequenzkomponente ($D_1$) umfaßt,

   d) Filtern des ersten elektrischen Multiplikationssignals ($Ec_1 . Er_1$) zur Erzeugung eines ersten, der Niedrigfrequenzkomponente ($D_1$) des ersten Multiplikationssignals entsprechenden Filtersignals,

   e) und Bestimmung eines ersten, dem ersten Filtersignal entsprechenden Frequenzspektrums ($S_1$) während einer ersten, mit dem ersten Zeitpunkt $t_1$ beginnenden Meßzeit $\Delta t_1$,

   wobei dieses Verfahren dadurch gekennzeichnet ist, daß der ausgesandte Radarstrahl (4) relativ groß ist, daß sich die erste Frequenz $f_1$ im Verlauf der Zeit verändern kann und daß das Verfahren unter anderem die folgenden Verfahrensschritte umfaßt:

f)    Messen der Höhe h der Radar-Sende/ Empfangseinheit (5) über dem Boden,

g)    Senden eines zweiten elektrischen Sinus-Steuersignals ($Ec_2$) mit einer zweiten Frequenz $f_2$ an die Sende/ Empfangseinheit (5) während eines zweiten Zeitpunkts $t_2$, der dem ersten Zeitpunkt $t_1$ eng benachbart ist, was bewirkt, daß die Sende/Empfangseinheit (5) eine zweite Auftreff-Radarwelle mit derselben Frequenz $f_2$ aussendet,

h)    Auffangen einer zweiten reflektierten Radarwelle, welche durch die Reflektion der zweiten auf dem Boden auftreffenden Radarwelle entsteht, und Erzeugung eines zweiten elektrischen Auffangsignals ($Er_2$) aus dieser zweiten reflektierten Radarwelle,

i)    Multiplizieren des zweiten elektrischen Steuersignals ($Ec_2$) mit dem zweiten elektrischen Auffangsignal ($Er_2$) zur Erzeugung eines zweiten elektrischen Multiplikationssignals ($Ec_2 \cdot Er_2$), welches eine Hochfrequenzkomponente ($C_2$) und eine Niedrigfrequenzkomponente ($D_2$) umfaßt,

j)    Filtern des zweiten elektrischen Multiplikationssignals ($Ec_2 \cdot Er_2$) zur Erzeugung eines zweiten, der Niedrigfrequenzkomponente ($D_2$) des zweiten Multiplikationssignals proportionalen Filtersignals,

k)    Bestimmung eines zweiten, dem zweiten Filtersignal entsprechenden Frequenzspektrums ($S_2$) während einer zweiten Meßzeit $\Delta t_2$, die mit dem zweiten Zeitpunkt $t_2$ beginnt,

l)    Lokalisierung eines ersten Einzelpunktes ($P_1$) auf dem ersten Spektrum ($S_1$) und eines zweiten Einzelpunktes ($P_2$) auf dem zweiten Spektrum ($S_2$) in einer Weise, daß das erste und das zweite Spektrum auf der Höhe dieser beiden Einzelpunkte jeweils einander benachbarte, aber in ihrer Frequenz etwas zueinander verschobene Formen aufweisen, wobei diese beiden Einzelpunkte durch eine Reflektion am selben Bodenpunkt (2a) entstehen,

m)    Messen von ersten und zweiten, den ersten und zweiten Einzelpunkten ($P_1$, $P_2$) entsprechenden Frequenzen $F_1$, $F_2$ auf dem ersten bzw. dem zweiten Spektrum ($S_1$, $S_2$),

n)    und Berechnen der Geschwindigkeit v des Fahrzeugs in bezug zum Boden ausgehend von der Höhe h der Radar-Sende/Empfangseinheit über dem Boden und von der ersten und zweiten, jeweils einem der beiden Einzelpunkte ($P_1$, $P_2$) entsprechenden Frequenz $F_1$, $F_2$.

2.  Verfahren nach Anspruch 1, wobei:

-    die erste und zweite Frequenz f1, f2 wenigstens während der ersten und zweiten Meßzeit $\Delta t_1$, $\Delta t_2$ lineare Funktionen der Zeit darstellen

-    und der Verfahrensschritt n) darin besteht, das folgende System zweier Gleichungen mit zwei Unbekannten $\alpha$ und v zu lösen:

$$(VII) \qquad F_1 = \left| f'_1 \cdot \frac{2h}{c \sin \alpha} - \frac{2v \cos \alpha}{c} f_1 (t_1 + \Delta t_1/2) \right|$$

$$(VIII) \qquad F_2 = \left| f'_2 \cdot \frac{2h}{c \sin \alpha} - \frac{2v \cos \alpha}{c} f_2 (t_2 + \Delta t_2/2) \right|$$

wobei:

-    c für die Fortpflanzungsgeschwindigkeit der Radarwellen in der Luft steht,

-    $\alpha$ einen Winkel zwischen der Bewegungsrichtung des Fahrzeugs und einer Richtung symbolisiert, welche sich zwischen der Sende/Empfangseinheit (5) und dem Punkt (2a) am Boden erstreckt, mit dessen Hilfe der erste und der zweite Einzelpunkt ($P_1$, $P_2$) erzeugt wurden,

-    $f_1 (t_1 + \Delta t_1/2)$ einen Wert der ersten Frequenz $f_1$ zu einem Zeitpunkt $t_1 + \Delta t_1/2$ bezeichnet,

- $f'_1$ für den Wert einer Ableitung der ersten Frequenz $f_1$ hinsichtlich der Zeit im Verlauf der ersten Meßzeit $\Delta t_1$ steht,

- $f_2 (t_2 + \Delta t_2/2)$ einen Wert der zweiten Frequenz $f_2$ zum Zeitpunkt $t_2 + \Delta t_2/2$ bezeichnet,

- und $f'_2$ für einen Wert einer Ableitung der zweiten Frequenz $f_2$ hinsichtlich der Zeit im Verlauf der zweiten Meßzeit $\Delta t_2$ steht.

3. Verfahren nach Anspruch 2, wobei die zweite Frequenz $f_2$ konstant ist und die erste Frequenz $f_1$ zum Zeitpunkt $t_1 + \Delta t_1/2$ einen der zweiten Frequenz f2 benachbarten Wert $f_1 (t_1 + \Delta t_1/2)$ aufweist und wobei die Geschwindigkeit v des Fahrzeugs in bezug zum Boden mittels der folgenden Formel berechnet wird:

$$(XIV) \quad v = \frac{c \ F_2}{2 \ f_2 \sqrt{1 - \left[ \dfrac{2 \ f'_1 \ . \ h}{c \ (F_1 - F_2)} \right]^2}}$$

4. Verfahren nach einem der Ansprüche 2 und 3, wobei der Radarstrahl (4) eine im wesentlichen senkrecht zum Boden (2) verlaufende Senderichtung (4a) aufweist, so daß das erste Spektrum ($S_1$) eine für diese im wesentlichen senkrecht zum Boden (2) verlaufende Richtung charakteristische Spitze $P_1$ ($\pi/2$) besitzt, wobei zum Verfahrensschritt f) das Messen einer der charakteristischen Spitze entsprechenden Frequenz $F_1$ ($\pi/2$) am ersten Spektrum ($S_1$) und das darauffolgende Berechnen der Höhe h der Radar-Sende/Empfangseinheit (5) über dem Bcden mittels der folgenden Formel gehört:

$$(XV) \quad h = \frac{F_1(\pi/2) \ . \ c}{2 \ f'_1}$$

5. Verfahren nach einem der vorangegangenen Ansprüche, wobei die Verfahrensschritte e) und k) eine Digitalisierung des ersten bzw. zweiten Filtersignals umfassen.

6. Verfahren nach Anspruch 5, wobei das erste und das zweite Spektrum ($S_1$, $S_2$) ausgehend von der Digitalisierung des ersten und zweiten Filtersignals durch eine schnelle Fourier-Transformation bestimmt werden.

7. Verfahren nach einem der vorangegangenen Ansprüche, wobei die Verfahrensschritte 1) und m) für mehrere Paare erster und zweiter Einzelpunkte ($P_1$, $P_2$) durchgeführt werden und so mehrere Paare erster und zweiter, den auf den ersten bzw. zweiten Spektren ($S_1$, $S_2$) liegenden Einzelpunktpaaren entsprechender Frequenzen $F_1$, $F_2$ anfallen, wobei die Geschwindigkeit v des Fahrzeugs sodann als Funktion der Höhe h der Radar-Sende/Empfangseinheit über dem Boden und der verschiedenen Paare aus ersten und zweiten, den Einzelpunkten entsprechenden Frequenzen $F_1$, $F_2$ berechnet wird.

8. Verfahren nach Anspruch 7, wobei der Verfahrensschritt f) darin besteht, gleichzeitig mit der Geschwindigkeit v die Höhe h aus verschiedenen Paaren erster und zweiter, den Einzelpunkten entsprechender Frequenzen $F_1$, $F_2$ zu berechnen.

9. Verfahren nach einem der vorangegangenen Ansprüche, wobei es sich bei dem Fahrzeug (1) um ein sich am Boden (2) bewegendes Landfahrzeug handelt.

10. Vorrichtung zur Durchführung eines Verfahrens nach einem der vorangegangenen Ansprüche zur Messung der Geschwindigkeit v eines sich in einer parallel zum Boden (2) verlaufenden Richtung bewegenden Fahrzeugs (1), wobei die Vorrichtung die folgenden Bestandteile enthält:

- eine Sende/Empfangseinheit (5) für Radarwellen, wobei diese Sende/Empfangseinheit einen Eingang (5a) zum Empfang eines eine bestimmte Frequenz $f_1$, $f_2$ aufweisenden elektrischen Sinus-Steuersignals ($Ec_1$, $Ec_2$)

umfaßt, um so eine dieselbe Frequenz aufweisende auftreffende Radarwelle zu erzeugen, welche einen in Bewegungsrichtung nach vorn oder nach hinten zum Boden hin gerichteten Radarstrahl (4) bildet, wobei die Sende/ Empfangseinheit (5) unter anderem auch einen Ausgang (5b) zur Erzeugung eines elektrischen Auffangsignals ($Er_1$, $Er_2$) umfaßt, welches mit Hilfe einer von der Sende/Empfangseinheit empfangenen reflektierten Radarwelle erzeugt wird,

- einen Oszillator (6) mit einem Ausgang (6a), der mit dem Eingang (5a) der Sende/Empfangseinheit verbunden ist und dazu dient, das Steuersignal ($Ec_1$, $Ec_2$) zu erzeugen,

- eine Mischschaltung (8) mit zwei Eingängen (8a, 8b) und einem Ausgang (8c), wobei die beiden Eingänge (8a, 8b) der Mischschaltung jeweils mit dem Ausgang (5b) der Sende/Empfangseinheit bzw. mit dem Oszillator verbunden sind, um das elektrische Steuersignal ($Ec_1$, $Ec_2$) bzw. das elektrische Auffangsignal ($Er_1$, $Er_2$) zu empfangen, und die Mischschaltung an ihrem Ausgang (8c) ein elektrisches Multiplikationssignal erzeugt, das dem Produkt des elektrischen Auffangsignals ($Er_1$, $Er_2$) und des elektrischen Steuersignals ($Ec_1$, $Ec_2$) entspricht, wobei dieses Multiplikationssignal eine Hochfrequenzkomponente ($C_1$, $C_2$) und eine Niedrigfrequenzkomponente ($D_1$, $D_2$) aufweist,

- ein Tiefpaßfilter (9) mit einem Eingang (9a) und einem Ausgang (9b), wobei der Eingang (9a) des Tiefpaßfilters zum Empfang des Multiplikationssignals mit dem Ausgang (8c) der Mischschaltung verbunden ist und das Tiefpaßfilter dazu dient, an seinem Ausgang (9b) ein Filtersignal zu erzeugen, das der Niedrigfrequenzkomponente ($D_1$, $D_2$) des Multiplikationssignals entspricht,

- eine Zentraleinheit (10) mit einem ersten Eingang (10a), der zum Empfang des Filtersignals mit dem Ausgang (9b) des Tiefpaßfilters verbunden ist, wobei die Zentraleinheit (10) so ausgelegt ist, daß sie zur Berechnung der Geschwindigkeit v des Fahrzeugs auf der Grundlage des Filtersignals ein Frequenzspektrum des Filtersignals bestimmen kann,

wobei diese Vorrichtung dadurch gekennzeichnet ist, daß der auftreffenden Radarstrahl (4) relativ groß ist, der Oszillator (6) unter anderem zum Empfang einer Steuerspannung einen Steuereingang (6b) umfaßt und so ausgelegt ist, daß die Frequenz des elektrischen Steuersignals ($Ec_1$, $Ec_2$) eine Funktion der Steuerspannung ist, wobei der Steuereingang (6b) des Oszillators mit einer ihrerseits von der Zentraleinheit gesteuerten Spannungsquelle (7) verbunden ist und wobei die Zentraleinheit (10) unter anderem Mittel umfaßt, um die Höhe h der Sende/ Empfangseinheit (5) über dem Boden festzustellen, und die Zentraleinheit (10) dazu dient:

- die abwechselnde Erzeugung einer ersten und einer zweiten Steuerspannung durch die Spannungsquelle (7) herbeizuführen, so daß vom Oszillator abwechselnd erste und zweite elektrische Steuersignale ($Ec_1$, $Ec_2$) erzeugt werden, welche jeweils eine der ersten bzw. zweiten Steuerspannung proportionale erste bzw. zweite Frequenz $f_1$, $f_2$ aufweisen, wobei wenigstens die erste Steuerspannung im Verlauf der Zeit variabel ist, so daß sich wenigstens die erste Frequenz $f_1$ mit der Zeit verändern kann,

- während einer ersten, mit einem ersten Zeitpunkt $t_1$ beginnenden Meßzeit $\Delta t_1$, in der der Oszillator das erste elektrische Steuersignal ($Ec_1$) erzeugt, ein erstes Frequenzspektrum ($S_1$) des Filtersignals zu bestimmen, und während einer zweiten Meßzeit $\Delta t_2$, die mit einem zweiten Zeitpunkt $t_2$, der sehr nahe am ersten Zeitpunkt $t_1$ liegt, beginnt und während der der Oszillator ein zweites elektrisches Steuersignal ($Ec_2$) erzeugt, ein zweites Frequenzspektrum ($S_2$) des Filtersignals während eines zweiten, dem ersten Zeitpunkt $t_1$ sehr nahen Zeitpunkts $t_2$ zu ermitteln,

- derart auf dem ersten Spektrum ($S_1$) einen ersten Einzelpunkt ($P_1$) und auf dem zweiten Spektrum ($S_2$) einen zweiten Einzelpunkt ($P_2$) zu lokalisieren, daß das erste und das zweite Spektrum auf der Höhe dieser beiden Einzelpunkte einander benachbarte, aber zueinander in der Frequenz etwas verschobene Formen aufweisen, wobei die beiden Einzelpunkte durch Reflektion vom selben Punkt (2a) am Boden erzeugt wurden,

- auf dem ersten und dem zweiten Spektrum ($S_1$, $S_2$) erste und zweite Frequenzen ($F_1$, $F_2$) zu messen, die jeweils dem ersten bzw. dem zweiten Einzelpunkt ($P_1$, $P_2$) entsprechen,

- und die Geschwindigkeit v des Fahrzeugs in bezug zum Boden ausgehend von der Höhe h der Radar-Sende/ Empfangseinheit über dem Boden und von der ersten und zweiten, den beiden Einzelpunkten ($P_1$, $P_2$) entsprechenden Frequenz $F_1$, $F_2$ zu berechnen.

**11.** Vorrichtung nach Anspruch 10, wobei

- die ersten und zweiten Frequenzen $f_1$, $f_2$ lineare Funktionen der Zeit darstellen, und zwar wenigstens während der ersten und zweiten Meßzeit $\Delta t_1$, $\Delta t_2$,

- und die Zentraleinheit so ausgelegt ist, daß sie das folgende System zweier Gleichungen mit zwei Unbekannten $\alpha$ und $v$ lösen kann:

$$(VII) \qquad F_1 = \left| f'_1 \cdot \frac{2h}{c \sin \alpha} - \frac{2v \cos \alpha}{c} f_1(t_1 + \Delta t_1/2) \right|$$

$$(VIII) \qquad F_2 = \left| f'_2 \cdot \frac{2h}{c \sin \alpha} - \frac{2v \cos \alpha}{c} f_2(t_2 + \Delta t_2/2) \right|$$

wobei

- c für die Fortpflanzungsgeschwindigkeit der Radarwellen in der Luft steht,

- $\alpha$ einen Winkel zwischen der Bewegungsrichtung des Fahrzeugs und einer Richtung symbolisiert, welche sich zwischen der Sende/ Empfangseinheit (5) und dem Punkt (2a) am Boden erstreckt, mit dessen Hilfe der erste und der zweite Einzelpunkt ($P_1$, $P_2$) erzeugt wurden,

- $f_1(t_1 + \Delta t_1/2)$ einen Wert der ersten Frequenz $f_1$ zu einem Zeitpunkt $t_1 + \Delta t_1/2$ bezeichnet,

- $f'_1$ für den Wert einer Ableitung der ersten Frequenz $f_1$ hinsichtlich der Zeit im Verlauf der ersten Meßzeit $\Delta t_1$ steht,

- $f_2(t_2 + \Delta t_2/2)$ einen Wert der zweiten Frequenz $f_2$ zu einem Zeitpunkt $t_2 + \Delta t_2/2$ bezeichnet,

- und $f'_2$ für einen Wert einer Ableitung der zweiten Frequenz $f_2$ hinsichtlich der Zeit im Verlauf der zweiten Meßzeit $\Delta t_2$ steht.

**12.** Vorrichtung nach einem der Ansprüche 10 und 11, wobei die Zentraleinheit (10) einen zweiten Eingang (10b) aufweist, der mit einem Höhensensor (11) verbunden ist, um ein Signal zu empfangen, das der Höhe h der Sende/ Empfangseinheit (5) über dem Boden (2) entspricht, wobei dieser zweite Eingang (10b) die oben genannten Mittel der Zentraleinheit zum Bestimmen der Höhe h der Sende/Empfangseinheit über dem Boden darstellt.

**13.** Vorrichtung nach einem der Ansprüche 10 und 11, wobei der auftreffende Radarstrahl (4) eine Emissionsrichtung (4a) aufweist, welche im wesentlichen senkrecht zum Boden (2) verläuft, so daß das erste Spektrum ($S_1$) eine für diese im wesentlichen senkrecht zum Boden verlaufende Richtung charakteristische Spitze ($P_1$ ($\pi/2$)) aufweist, wobei die Mittel zur Bestimmung der Höhe h der Sende/Empfangseinheit über dem Boden Mittel zum Messen einer dieser charakteristischen Spitze entsprechenden Frequenz $F_1(\pi/2)$ und Mittel zum Berechnen dieser Höhe h aus dieser Frequenz $F_1(\pi/2)$ umfassen.

**14.** Vorrichtung nach einem der Ansprüche 10 bis 13, wobei die Steuereinheit (10) so ausgelegt ist, daß sie das von ihr an ihrem ersten Eingang (10a) empfangene Filtersignal digitalisieren kann, ehe sie das Frequenzspektrum ($S_1$, $S_2$) dieses Filtersignals bestimmt.

## Claims

**1.** A method of measuring the speed $\underline{v}$ of a body (1) moving in a direction parallel to the ground (2), said measurement being performed by means of a Doppler radar (3) having a transmitter/receiver (5) fixed to the moving body (1) at a certain height $\underline{h}$ above the ground and designed to transmit a radar beam (4) towards the ground along a mean axis extending forwards or backwards relative to the direction of movement, said method including the following steps:

a) at a first instant $t_1$, supplying the radar transmitter/receiver (5) with a first sinusoidal control electrical signal

$(Ec_1)$ at a first frequency $f_1$ to cause the transmitter/receiver (5) to transmit a first incident radar wave at the same frequency $f_1$;

b) receiving a first reflected radar wave generated by the first incident radar wave being reflected on the ground, and generating from said first reflected radar wave a first received electrical signal $(Er_1)$;

c) multiplying together the first control electrical signal $(Ec_1)$ and the first received electrical signal $(Er_1)$, thereby generating a first multiplied electrical signal $(Ec_1.Er_1)$ having a high frequency component $(C_1)$ and a low frequency component $(D_1)$;

d) filtering the first multiplied electrical signal $(Ec_1.Er_1)$ to generate a first filtered signal proportional to the low frequency component $(D_1)$ of the first multiplied signal; and

e) during a first measurement time $\Delta t_1$ starting at the first instant $t_1$, determining a first frequency spectrum $(S_1)$ corresponding to the first filtered signal;

said method being characterized in that the transmitted radar beam (4) is relatively broad, in that the first frequency $f_1$ is time-varying, and in that said method further includes the following steps:

f) measuring the height $\underline{h}$ of the radar transmitter/receiver (5) above the ground;

g) at a second instant $t_2$ very close to the first instant $t_1$, supplying the transmitter/receiver (5) with a second sinusoidal control electrical signal $(Ec_2)$ having a second frequency $f_2$ to cause the transmitter/receiver (5) to transmit a second incident radar wave at that same frequency $f_2$;

h) receiving a second reflected radar wave generated by reflection of the second incident radar wave on the ground, and generating a second received electrical signal $(Er_2)$ from said second reflected radar wave;

i) multiplying together the second control electrical signal $(Ec_2)$ and the second received electrical signal $(Er_2)$, thereby generating a second multiplied electrical signal $(Ec_2.Er_2)$ having a high frequency component $(C_2)$ and a low frequency component $(D_2)$;

j) filtering the second multiplied electrical signal $(Ec_2.Er_2)$ to generate a second filtered signal proportional to the low frequency component $(D_2)$ of the second multiplied signal;

k) during a second measurement time $\Delta t_2$ starting from the second instant $t_2$, determining a second frequency spectrum $(S_2)$ corresponding to the second filtered signal;

l) identifying a first singular point $(P_1)$ in the first spectrum $(S_1)$ and a second singular point $(P_2)$ in the second spectrum $(S_1)$ such that the first and second spectra in the vicinity of said two singular points are similar in form but with a certain frequency shift, said two singular points being generated by reflection from the same point (2a) on the ground;

m) measuring in the first and second spectra $(S_1, S_2)$ first and second frequencies $F_1$, $F_2$ corresponding respectively to the first and second singular points $(P_1, P_2)$; and

n) computing the speed $\underline{v}$ of the moving body relative to the ground on the basis of the height $\underline{h}$ of the radar transmitter/receiver above the ground and of the first and second frequencies $F_1$, $F_2$ corresponding to the two singular points $(P_1, P_2)$.

2. A method according to claim 1, in which:

- the first and second frequencies $f_1$, $f_2$ are linear functions of time, at least during the first and second measurement times $\Delta t_1$, $\Delta t_2$; and

    step n) consists in solving the following system of two equations in two unknowns $\alpha$ and $\underline{v}$:

$$\text{VII)} \qquad F_1 = \left| f_1'. \frac{2h}{c.\sin \alpha} - \frac{2\,v.\cos \alpha}{c} f_1(t_1+\Delta t_1/2) \right|$$

$$\text{VIII)} \qquad F_2 = \left| f_2' \cdot \frac{2h}{c.\sin \alpha} - \frac{2\,v.\cos \alpha}{c} f_2(t_2+\Delta t_2/2) \right|$$

where:

- $\underline{c}$ is the propagation speed of the radar wave in air;
- $\alpha$ is the angle between the direction in which the body is moving and a direction extending between the transmitter/receiver (5) and the point (2a) on the ground that has generated the first and second singular points $(P_1, P_2)$;
- $f_1(t_1+\Delta t_1/2)$ designates the value of the first frequency $f_1$ at instant $t_1 + \Delta t_1/2$;

- $f_1'$ designates the value of the time derivative of the first frequency $f_1$ during the first measurement time $\Delta t_1$;
- $f_2(t_2+\Delta t_2/2)$ designates the value of the second frequency $f_2$ at instant $t_2 + \Delta t_2/2$; and
- $f_2'$ designates the value of the time derivative of the second frequency $f_2$ during the second measurement time $\Delta t_2$.

**3.** A method according to claim 2, in which the second frequency $f_2$ is constant, and the first frequency $f_1$ at instant $t_1 + \Delta t_1/2$ presents a value $f_1(t_1+\Delta t_1/2)$ close to that of the second frequency $f_2$, the speed $\underline{v}$ of the moving body relative to the ground then being computed from the formula:

$$XIV) \qquad v = \frac{cF_2}{2\,f_2\,\sqrt{1 - \{[2\,f_1'\,.h]/[c\,(F_1 - F_2)]\}^2}}$$

**4.** A method according to claim 2 or 3, in which the radar beam (4) includes a transmission direction (4a) that is substantially perpendicular to the ground (2) such that the first spectrum ($S_1$) includes a characteristic peak $P_1(\pi/2)$ corresponding to said direction substantially perpendicular to the ground (2), step f) of the method including a step that consists in measuring a frequency $F_1(\pi/2)$ corresponding to said characteristic peak in the first spectrum ($S_1$) followed by a step consisting in computing the height $\underline{h}$ of the radar transmitter/receiver (5) relative to the ground from the formula:

$$XV) \qquad h = \frac{F_1(\pi/2).c}{2f_1'}$$

**5.** A method according to any preceding claim, in which steps e) and k) include a step of digitizing the first and second filtered signals.

**6.** A method according to claim 5, in which the first and second spectra ($S_1$, $S_2$) are determined by the fast Fourier transform on the basis of the digitized first and second filtered signals.

**7.** A method according to any preceding claim, in which steps l) and m) are performed for a plurality of pairs of first and second singular points ($P_1$, $P_2$) so as to obtain a plurality of pairs of first and second frequencies $F_1$, $F_2$ corresponding respectively to said pairs of singular points in the first and second spectra ($S_1$, $S_2$), the speed $\underline{v}$ of the moving body then being computed as a function of the height $\underline{h}$ of the radar transmitter/receiver above the ground and of the various pairs of first and second frequencies $F_1$, $F_2$ corresponding to the singular points.

**8.** A method according to claim 7, in which step f) consists in computing the height $\underline{h}$ simultaneously as the speed $\underline{v}$ from the various pairs of first and second frequencies $F_1$, $F_2$ corresponding to the singular points.

**9.** A method according to any preceding claim, in which the moving body (1) is a vehicle running on the ground (2).

**10.** Apparatus for implementing a method according to any preceding claim in order to measure the speed $\underline{v}$ of a body (1) moving in a direction parallel to the ground (2), said apparatus comprising:

- a radar wave transmitter/receiver (5), said transmitter/receiver having an input (5a) for receiving a sinusoidal control electrical signal ($Ec_1$, $Ec_2$) at a certain frequency $f_1$, $f_2$ to generate an incident radar wave of the same frequency by forming a radar beam (4) directed towards the ground, going forwards or backwards relative to the direction of movement, said transmitter/receiver (5) further including an output (5b) for generating a received electrical signal ($Er_1$, $Er_2$) from a reflected radar wave received by the transmitter/receiver;
- an oscillator (6) including an output (6a) connected to the input (5a) of the transmitter/receiver and designed to generate the control electrical signal ($Ec_1$, $Ec_2$);
- a mixer circuit (8) having two inputs (8a, 8b) and an output (8c), the two inputs (8a, 8b) of the mixer being connected respectively to the output (5b) of the transmitter/receiver and to the oscillator to receive respectively the control electrical signal ($Ec_1$, $Ec_2$) and the received electrical signal ($Er_1$, $Er_2$), the mixer circuit generating at its output (8c) a "multiplied" electrical signal corresponding to the product of the received electrical signal ($Er_1$, $Er_2$) multiplied by the control electrical signal ($Ec_1$, $Ec_2$), said multiplied signal having a high frequency component ($C_1$, $C_2$) and a low frequency component ($D_1$, $D_2$);
- a lowpass filter (9) having an input (9a) and an output (9b), the input (9a) of the lowpass filter being connected to the output (8c) of the mixer to receive the multiplied signal, and the lowpass filter being designed to generate a filtered signal at its output (9b) representative of the low frequency component ($D_1$, $D_2$) of the multiplied signal; and

- a central unit (10) including a first input (10a) connected to the output (9b) of the lowpass filter to receive the filtered signal, said central unit (10) being designed to determine a frequency spectrum of the filtered signal in order to compute the speed $\underline{v}$ of the moving body from the filtered signal;

the apparatus being characterized in that the beam (4) of the incident radar wave is relatively broad, the oscillator (6) further including a control input (6b) designed to receive a control voltage, the oscillator (6) being designed so that the frequency of the control electrical signal ($Ec_1$, $Ec_2$) is a function of the control voltage, the control input (6b) of the oscillator being connected to a voltage generator (7) itself driven by the central unit, the central unit (10) further including means for determining the height $\underline{h}$ of the transmitter/receiver (5) relative to the ground, and the central unit (10) being designed:

- to cause the voltage generator (7) to generate in alternation a first control voltage and a second control voltage so as to cause the oscillator to generate in alternation first and second control electrical signals ($Ec_1$, $Ec_2$) having respective first and second frequencies $f_1$, $f_2$ respectively proportional to the first and second control voltages, at least the first control voltage being time-varying, so that at least the first frequency $f_1$ is time-varying;
- during a first measurement time $\Delta t_1$ starting from a first instant $t_1$, to determine a first frequency spectrum ($S_1$) of the filtered signal while the oscillator generates the first control electrical signal ($Ec_1$), and during a second measurement time $\Delta t_2$ starting from a second instant $t_2$ very close to the first instant $t_1$, to determine a second frequency spectrum ($S_2$) of said filtered signal at a second instant $t_2$ very close to the first instant $t_1$, during which the oscillator generates the second control electrical signal ($Ec_2$);
- to identify a first singular point ($P_1$) in the first spectrum ($S_1$) and a second singular point ($P_2$) in the second spectrum ($S_2$) such that the first and second spectra have forms that are similar in the vicinity of said two singular points but with a certain frequency shift, said two singular points being generated by reflection from the same point (2a) of the ground;
- to measure first and second frequencies $F_1$, $F_2$ corresponding respectively to the first and second singular points ($P_1$, P2) in the first and second spectra ($S_1$, $S_2$); and
- to compute the speed $\underline{v}$ of the moving body relative to the ground on the basis of the height $\underline{h}$ of the radar transmitter/receiver above the ground and of the first and second frequencies $F_1$, $F_2$ corresponding to the two singular points ($P_1$, $P_2$).

11. Apparatus according to claim 10, in which:

- the first and second frequencies $f_1$, $f_2$ are linear functions of time, at least during the first and second measurement times $\Delta t_1$, $\Delta t_2$; and
- the central unit is designed to solve the following system of two equations in two unknowns a and $\underline{v}$:

$$\text{VII)} \qquad F_1 = \left| f_1{}' \cdot \frac{2h}{c.\sin\alpha} - \frac{2v\cos\alpha}{c} f_1(t_1 + \Delta t_1/2) \right|$$

$$\text{VIII)} \qquad F_2 = \left| f_2{}' \cdot \frac{2h}{c.\sin\alpha} - \frac{2v.\cos\alpha}{c} f_2(t_2 + \Delta t_2/2) \right|$$

where:

- $\underline{c}$ is the propagation speed of the radar wave in air;
- a is the angle between the direction in which the body is moving and a direction extending between the transmitter/receiver (5) and the point (2a) on the ground that has generated the first and second singular points ($P_1$, $P_2$);
- $f_1(t_1 + \Delta t_1/2)$ designates the value of the first frequency $f_1$ at instant $t_1 + \Delta t_1/2$;
- $f_1{}'$ designates the value of the time derivative of the first frequency $f_1$ during the first measurement time $\Delta t_1$;
- $f_2(t_2 + \Delta t_2/2)$ designates the value of the second frequency $f_2$ at instant $t_2 + \Delta t_2/2$; and
- $f_2{}'$ designates the value of the time derivative of the second frequency $f_2$ during the second measurement time $\Delta t_2$.

12. Apparatus according to claim 10 or 11, in which the central unit (10) includes a second input (10b) connected to a height sensor (11) to receive a signal representative of the height $\underline{h}$ of the transmitter/receiver (5) relative to the ground (2), said second input (10b) constituting the above-mentioned means of the central unit for determining the height $\underline{h}$ of the transmitter/receiver relative to the ground.

13. Apparatus according to claim 10 or 11, in which the beam (4) of the incident radar wave includes a transmission direction (4a) that is substantially perpendicular to the ground (2), such that the first spectrum ($S_1$) includes a peak ($P_1(\pi/2)$) characteristic of said direction that is substantially perpendicular to the ground, the means for determining the height $\underline{h}$ of the transmitter/receiver relative to the ground comprising means for measuring a frequency $F_1(\pi/2)$ corresponding to said characteristic peak and means for computing said height $\underline{h}$ from said frequency $F_1(\pi/2)$.

14. Apparatus according to any one of claims 10 to 13, in which the control unit (10) is designed to digitize the filtered signal it receives at its first input (10a) prior to determining the frequency spectrum ($S_1$, $S_2$) of said filtered signal.

FIG.1.

FIG.2.

FIG.3.

FIG.4.